# EUROPÄISCHE PATENTANMELDUNG

(11) **EP 3 369 591 A1**
(43) Veröffentlichungstag der Anmeldung: **05.09.2018**
(21) Anmeldenummer: 17209158.9
(22) Anmeldetag: 20.12.2017
(51) Int. Cl.: B60D 1/58

(54) **NIEDERHALTERANORDNUNG FÜR EINE ANHÄNGEKUPPLUNG**

(30) Priorität: 01.03.2017 DE 102017104307
(71) Anmelder: GKN Walterscheid GmbH, 53797 Lohmar (DE)
(72) Erfinder: AFFLERBACH, Henning, 44227 Dortmund (DE)
(74) Vertreter: Neumann Müller Oberwalleney & Partner Patentanwälte

(57) **Zusammenfassung**

Niederhalteranordnung 7 für eine Anhängekupplung 1 für Zugfahrzeuge, wobei die Niederhalteranordnung 7 folgendes aufweist:
ein Gehäuse 8 mit einer Fangfläche 12, welche in einem an einer Anhängekupplung 1 montiertem Zustand einem Kupplungselement 2 der Anhängekupplung 1 zugewandt ist,
einen Niederhalter 9, der zwischen einer Offenstellung und einer Schließstellung am Gehäuse 8 bewegbar gehalten ist und in der Schließstellung über die Fangfläche 12 derart übersteht dass, ein Gegenkupplungselement 4 am Kupplungselement 2 sicherbar ist,
eine Betätigungseinrichtung, mittels derer der Niederhalter 9 von seiner Offenstellung in seine Schließstellung verstellbar ist, wobei die Betätigungseinrichtung ein Betätigungselement 46 umfasst, welches zwischen einer Ausgangsstellung und einer Betätigungsstellung verstellbar am Gehäuse 8 gehalten ist, wobei das Betätigungselement 46 in seiner Ausgangsstellung von einem Gegenkupplungselement 4 verstellbar von der Fangfläche 12 vorsteht.

## Beschreibung

Die Erfindung betrifft eine Niederhalteranordnung für eine Anhängerkupplung für Zugfahrzeuge, wobei die Niederhalteranordnung ein Gehäuse mit einer Fangfläche, welche in einem an einer Anhängekupplung montiertem Zustand einem Kupplungselement der Anhängekupplung zugewandt ist, aufweist. Ferner ist ein Niederhalter vorgesehen, der zwischen einer Offenstellung und einer Schließstellung am Gehäuse bewegbar gehalten ist und in der Schließstellung über die Fangfläche derart übersteht, dass ein Gegenkupplungselement am Kupplungselement sicherbar ist. Mittels einer Betätigungseinrichtung ist der Niederhalter von seiner Offenstellung in seine Schließstellung verstellbar, wobei die Betätigungseinrichtung ein Betätigungselement umfasst, welches zwischen einer Ausgangsstellung und einer Betätigungsstellung verstellbar am Gehäuse gehalten ist. Ferner betrifft die Erfindung eine Anhängerkupplung mit einer solchen Niederhalteranordnung.

Eine solche Niederhalteranordnung ist aus der EP 1 302 341 A2 bekannt. Die dort beschriebene Niederhalteranordnung zeigt einen Zapfenträger in Form eines Gehäuses, in dem ein Niederhalter schwenkbar aufgenommen ist. Der Niederhalter umfasst einen Drehzapfen und einen Verriegelungsausleger. Der Drehzapfen ist mit einer im wesentlichen kreiszylindrischen Außenfläche in einer Zapfenaufnahme des Gehäuses drehbar gelagert. Der Niederhalter ist am Gehäuse zwischen einer Schließstellung, in der der Verriegelungsausleger über eine Fangfläche des Gehäuses vorsteht, und einer Offenstellung, in der der Verriegelungsausleger nicht über die Fangfläche vorsteht, drehbar. Mittels einer Feder ist der Niederhalter in Richtung zur Offenstellung mit Kraft beaufschlagt. Es ist ein Mitnehmer vorgesehen, der den Niederhalter in der Offenstellung und in der Schließstellung hält. Hierzu greift der Mitnehmer in der Offenstellung und in der Schließstellung jeweils in eine Verriegelungsausnehmung des Drehzapfens ein. In der Offenstellung wird somit der Niederhalter gegen die Federkraft in der Offenstellung gehalten. Der Mitnehmer lässt sich durch einen Auslösezapfen derart bewegen, dass der Mitnehmer aus der Verriegelungsausnehmung heraus bewegt wird, so dass der Niederhalter durch die Federkraft in die Schließstellung bewegt wird. Sobald dann der Auslösezapfen wieder in die Ausgangsstellung bewegt wird, greift der Mitnehmer in eine der Verriegelungsausnehmungen des Drehzapfens ein, so dass der Niederhalter in der Schließstellung gesichert ist. Der Auslösezapfen ist axial verschiebbar im Gehäuse gelagert, wobei der Auslösezapfen entlang einer Achse axial verstellbar ist, die parallel zur Drehachse des Niederhalters angeordnet ist. Von einer Oberseite aus kann der Auslösezapfen manuell bedient werden. Die Verriegelungsausnehmungen des Mitnehmers sind in die Außenumfangsfläche des Drehzapfens des Niederhalters eingearbeitet und bilden Arretierflächen, die mit dem Mitnehmer in Anlage kommen, wenn versucht wird, den Niederhalter zu bewegen. Durch axiales Verstellen parallel zur Drehachse wird der Mitnehmer aus den Verriegelungsausnehmungen herausbewegt und befindet sich dann in einer Freigabestellung, in der der Mitnehmer in eine Umfangsnut in der Außenumfangsfläche des Drehzapfens eingreift, so dass der Drehzapfen gedreht werden kann.

In der Schließstellung steht der Verriegelungsausleger derart von der Fangfläche des Gehäuses vor, dass er ein Kupplungselement in Form einer Kugel übergreift. Die Kugel dient zum Kuppeln mit einem Gegenkupplungselement in Form einer Kugelkalotte, die im gekuppelten Zustand auf der Kugel sitzt und von dem Verriegelungsausleger derart gehalten wird, dass die Kugelkalotte nicht von der Kugel entfernt werden kann. Zum Ankuppeln muss zunächst der Auslösezapfen in seine Freigabestellung überführt werden, so dass der Niederhalter gedreht werden kann. Der Niederhalter wird dann gegen die Federkraft von der Schließstellung in die Offenstellung bewegt und der Auslösezapfen wieder in die Sicherungsstellung überführt. In dieser Stellung ist der Niederhalter in seiner Offenstellung gehalten. Sodann kann das Zugfahrzeug an einen Anhänger mit einer Gegenkupplung, zum Beispiel einer Kugelkalotte, herangefahren werden, bis sich die Kugelkalotte über der Kugel befindet. Die Kalotte kann dann auf die Kugel herabbewegt werden oder, sofern es sich um einen schwenkbaren Kugelbalken handelt, kann die Anhängekupplung samt Niederhalteranordnung und Kugel nach oben geschwenkt werden, bis die Kugel in die Kugelkalotte eintaucht. Daraufhin wird der Auslösezapfen manuell in die Freigabestellung überführt, so dass der Niederhalter von seiner Offenstellung in die Schließstellung bewegt wird. Diese Bewegung erfolgt automatisch durch die Federkraft. Im Anschluss wird der Auslösezapfen wieder in die Sicherungsstellung überführt, um den Niederhalter in seiner Schließstellung zu arretieren.

Eine weitere Niederhalteranordnung ist aus der EP 1 820 672 A1 bekannt. Diese entspricht in etwa der Niederhalteranordnung mit drehbarem Niederhalter gemäß der EP 1 302 341 A2, wobei jedoch der Niederhalter nicht automatisch durch ein Federelement, sondern rein manuell verdrehbar ist. Der Niederhalter ist ausschließlich in seiner Schließstellung gegen Verdrehen sicherbar. Hierzu weist der Drehzapfen auf seiner sonst kreiszylindrischen Außenumfangsfläche eine Ausnehmung auf, die im Querschnitt betrachtet entlang einer Sekante zur Außenumfangsfläche verläuft. In dem Gehäuse ist eine Bohrung vorgesehen, die die Drehachse des Niederhalters mit Abstand kreuzt und mit der Ausnehmung des Drehzapfens fluchtet, wenn sich der Niederhalter in seiner Schließstellung befindet. In die Bohrung wird zum Sichern des Niederhalters ein Bolzen seitlich in das Gehäuse eingeführt, so dass der Bolzen sich in der Ausnehmung des Drehzapfens gegen die durch die Ausnehmung gebildete ebene Arretierfläche abstützt und den Drehzapfen gegen Verdrehen sichert.

Beide beschriebenen Niederhalteranordnung machen es erforderlich, dass zum Ankuppeln und zum Überführen des Niederhalters von der Offenstellung in die Schließstellung der Fahrer vom Zugfahrzeug absteigen muss, um den Niederhalter entweder unmittelbar manuell oder durch Bedienung des Auslösezapfens in die Schließstellung zu überführen.

Aufgabe der vorliegenden Erfindung ist es, eine Niederhalteranordnung vorzusehen, bei der beim Ankuppelvorgang der Niederhalter automatisch von seiner Offenstellung in die Schließstellung überführbar ist.

Die Aufgabe wird erfindungsgemäß gelöst durch eine Niederhalteranordnung für eine Anhängekupplung für Zugfahrzeuge, wobei die Niederhalteranordnung folgendes aufweist:
ein Gehäuse mit einer Fangfläche, welche in einem an einer Anhängekupplung montiertem Zustand einem Kupplungselement der Anhängekupplung zugewandt ist, einen Niederhalter, der zwischen einer Offenstellung und einer Schließstellung am Gehäuse bewegbar gehalten ist und in der Schließstellung über die Fangfläche derart über steht dass, ein Gegenkupplungselement am Kupplungselement sicherbar ist, eine Betätigungseinrichtung, mittels derer der Niederhalter von seiner Offenstellung in seine Schließstellung verstellbar ist, wobei die Betätigungseinrichtung ein Betätigungselement umfasst, welches zwischen einer Ausgangsstellung und einer Betätigungsstellung verstellbar am Gehäuse gehalten ist, wobei das Betätigungselement in seiner Ausgangsstellung von einem Gegenkupplungselement verstellbar von der Fangfläche vorsteht.

Dadurch, dass das Betätigungselement in der Ausgangsstellung von der Fangfläche vorsteht, befindet sich dieses im Fangbereich für das Gegenkupplungselement. Beim Ankuppeln wird das Gegenkupplungselement zunächst gegen die Fangfläche anlaufen und somit das Betätigungselement von der Ausgangsstellung in die Betätigungsstellung überführen. Somit ist es nicht erforderlich, dass der Fahrer vom Zugfahrzeug absteigt. Durch den Kuppelvorgang an sich wird die Betätigungseinrichtung ausgelöst und der Niederhalter von der Offenstellung in die Schließstellung bewegt.

Grundsätzlich steht der Niederhalter in seiner Schließstellung weiter über die Fangfläche vor als in seiner Offenstellung, um in der Schließstellung das Gegenkupplungselement auf dem Kupplungselement halten zu können und in der Offenstellung freizugeben.

Vorzugsweise weist die Betätigungseinrichtung eine Sicherungseinrichtung auf, die zwischen einer Arretierstellung und einer Freigabestellung verstellbar ist, wobei die Sicherungseinrichtung in der Arretierstellung den Niederhalter zumindest in der Offenstellung arretiert. Somit ist der Niederhalter zumindest in der Offenstellung gegen ein Verstellen von der Offenstellung in die Schließstellung sicherbar. Vorzugsweise ist die Sicherungseinrichtung auch derart gestaltet, dass sie den Niederhalter in der Schließstellung arretieren kann.

Durch Überführen des Betätigungselements von der Ausgangsstellung in die Betätigungsstellung ist die Sicherungseinrichtung von der Arretierstellung in die Freigabestellung verstellbar. Dies bedeutet, dass der Niederhalter dann freigegeben und verstellbar ist, wenn sich das Betätigungselement in der Betätigungsstellung befindet. In der Ausgangsstellung des Betätigungselements befindet sich die Sicherungseinrichtung in der Arretierstellung, so dass ein Verstellen des Niederhalters nicht möglich ist.

In einer Ausgestaltung kann vorgesehen sein, dass die Sicherungseinrichtung zumindest einen Sicherungsbolzen aufweist, der zwischen einer Arretierstellung und einer Freigabestellung verstellbar ist. Der mindestens eine Sicherungsbolzen arretiert in seiner Arretierstellung den Niederhalter zumindest in der Offenstellung. Sofern die Sicherungseinrichtung derart gestaltet sein soll, dass diese den Niederhalter auch in der Schließstellung sichert, kann der Sicherungsbolzen den Niederhalter auch in der Schließstellung arretieren.

Zum Arretieren ist der Sicherungsbolzen in der Arretierstellung in Anlage zu einer ersten Arretierfläche des Niederhalters gehalten, so dass der Niederhalter in der Offenstellung gegen Verstellen in die Schließstellung gesichert ist. Ferner kann vorgesehen sein, dass der Sicherungsbolzen in der Arretierstellung in Anlage zu einer zweiten Arretierfläche des Niederhalters gehalten ist, so dass der Niederhalter in der Schließstellung gegen Verstellen in die Offenstellung gesichert ist.

Der Sicherungsbolzen ist vorzugsweise entlang einer Verstellachse verstellbar geführt, die die Drehachse des Niederhalters mit Abstand kreuzt. Der Niederhalter kann hierbei einen Drehzapfen aufweisen, der eine Außenumfangsfläche mit einer ersten Ausnehmung aufweist, wobei die erste Ausnehmung die erste Arretierfläche bildet. Hierbei ist der Niederhalter um eine Drehachse des Drehzapfens zwischen der Offenstellung und der Schließstellung drehbar.

Ferner kann vorgesehen sein, dass der entlang der Verstellachse verstellbare Sicherungsbolzen mit einer zweiten Ausnehmung des Drehzapfens des Niederhalters, die eine zweite Arretierfläche bildet, in Anlage ist, um den Niederhalter in der Schließstellung zu halten.

In Ausgestaltung können zwei Sicherungsbolzen vorgesehen sein, die gegensinnig entlang einer Verstellachse verstellbar sind. Hierbei kann die Funktion der Sicherungsbolzen derart aufgeteilt sein, dass ein erster der beiden Sicherungsbolzen in Anlage zur ersten Arretierfläche gehalten ist, um ein Drehen des Niederhalters aus der Offenstellung zu vermeiden und ein zweiter der beiden Sicherungsbolzen mit der zweiten Arretierfläche in Anlage kommt, um ein Verdrehen des Niederhalters aus der Schließstellung zu vermeiden. Es ist alternativ natürlich auch denkbar, dass beide Sicherungsbolzen jeweils mit beiden Arretierflächen in Anlage geraten, um eine Verdrehen des Niederhalters zu verhindern.

Vorzugsweise ist der Niederhalter in Richtung zur Schließstellung mit Kraft, vorzugsweise mittels einer Federkraft eines Federelements, beaufschlagt, um ein automatisches Verstellen des Niederhalters von der Offenstellung in die Schließstellung zu bewirken.

Grundsätzlich kann diese Bewegung jedoch auch über andere Verstelleinrichtungen, wie zum Beispiel eine elektrische Antriebseinheit, bewirkt werden. Der Niederhalter ist vorzugsweise mit einem Drehzapfen ausgestattet, mit dem der Niederhalter um eine Drehachse drehbar im Gehäuse aufgenommen ist. Hierbei weist der Niederhalter ferner einen Ausleger auf, der radial vom Drehzapfen derart vorsteht, dass der Niederhalter in der Schließstellung von der Fangfläche vorsteht.

Die Fangfläche ist vorzugsweise parallel zur Drehachse angeordnet. Die Fangfläche kann in Richtung der Drehachse betrachtet gewölbt ausgebildet sein, um ein Gegenkupplungselement besser fangen und zentrieren zu können.

Das Betätigungselement kann in einer in die Fangfläche mündende Ausnehmung des Gehäuses verstellbar, vorzugsweise verschwenkbar, aufgenommen sein. Hierbei steht das Betätigungselement in der Ausgangsstellung zumindest mit einem Betätigungsabschnitt aus der Ausnehmung vor, so dass der Betätigungsabschnitt von der Fangfläche vorsteht. In der Betätigungsstellung befindet sich der Betätigungsabschnitt bzw. das Betätigungselement tiefer in der Ausnehmung als in der Ausgangsstellung.

Es kann eine erste Verstelleinrichtung vorgesehen sein, mittels derer der Niederhalter von der Schließstellung in die Offenstellung überführbar ist. Hierbei kann es sich zum Beispiel um einen Bowdenzug oder einen anderen Antrieb, wie zum Beispiel einen Elektroantrieb, handeln. Darüber hinaus kann eine zweite Verstelleinrichtung vorgesehen sein, mittels derer die Sicherungseinrichtung von der Arretierstellung in die Freigabestellung überführbar ist. Auch hierbei kann es sich um die oben genannten möglichen Verstelleinrichtungen handeln.

Die Niederhalteranordnung ist ferner vorzugsweise Bestandteil einer Anhängekupplung für Zugfahrzeuge, wobei die Anhängekupplung neben der Niederhalteranordnung ein Kupplungselement zur Aufnahme eines Gegenkupplungselements aufweist. Bei der Anhängekupplung kann es sich zum Beispiel um eine Kugelkupplung oder eine Pitonkupplung handeln, wobei das Kupplungselement entweder eine Kugel oder ein Zugzapfen ist.

Ein bevorzugtes Ausführungsbeispiel wird im folgenden anhand der Figuren näher erläutert. Hierin zeigen:
- Figur 1: eine Explosionsdarstellung einer erfindungsgemäßen Anhängekupplung,
- Figur 2: einen Längsschnitt durch das Gehäuse im Bereich der Zapfenaufnahme,
- Figur 3: einen Längsschnitt durch das Gehäuse quer zum Schnitt gemäß Figur 2 mit dem Niederhalter in der Schließstellung und dem Betätigungselement in der Ausgangsstellung,
- Figur 4: einen Längsschnitt gemäß Figur 3 mit dem Niederhalter in der Offenstellung und dem Betätigungselement in der Betätigungsstellung,
- Figur 5a: Niederhalteranordnung gemäß Figur 2 in einem Querschnitt entlang der Schnittlinie III-III mit dem Niederhalter in der Offenstellung,
- Figur 5b: Niederhalteranordnung gemäß Figur 2 in einem Querschnitt entlang der Schnittlinie III-III mit dem Niederhalter in einer Zwischenstellung und
- Figur 5c: Niederhalteranordnung gemäß Figur 2 in einem Querschnitt entlang der Schnittlinie III-III mit dem Niederhalter in der Schließstellung,

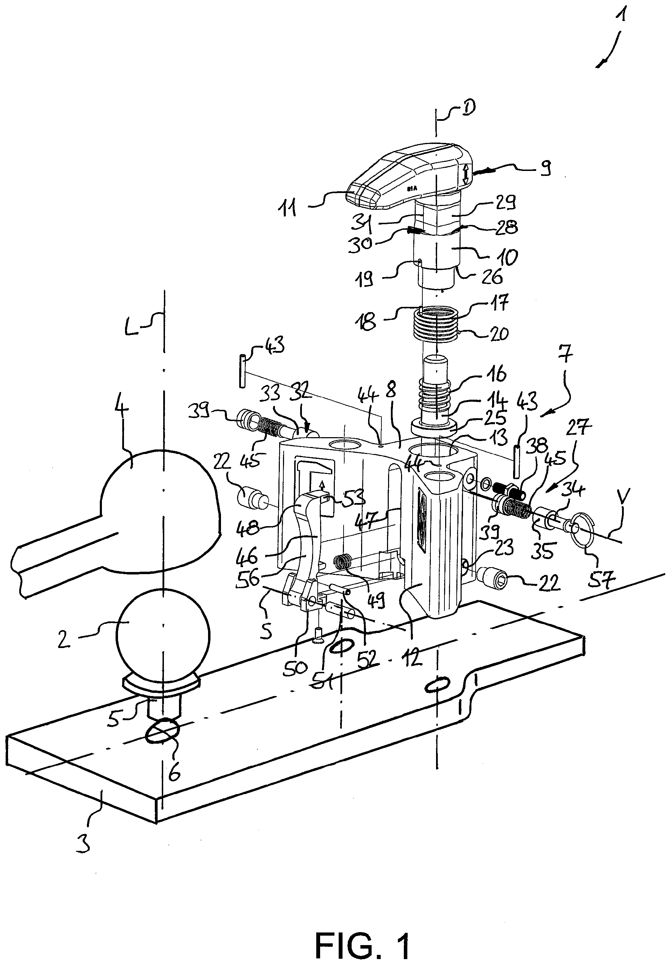

Figur 1 zeigt eine Explosionsdarstellung einer erfindungsgemäßen Anhängekupplung 1, welche ein Kupplungselement 2, hier in Form einer Kugel, aufweist, die an einem Basiselement 3, hier einem Kugelbalken, befestigt ist. Das Basiselement 3 kann in beliebiger Form ausgebildet sein, zum Beispiel auch als Kupplungsbock, Flanschkupplung oder dergleichen. Im vorliegenden Fall weist das Kupplungselement 2 einen Befestigungszapfen 5 auf, mit dem es in einer Befestigungsbohrung 6 des Basiselements 3 befestigt ist. Die Anhängekupplung dient zur Befestigung an einem Zugfahrzeug, wobei das Basiselement 3 mit dem Zugfahrzeug verbunden werden kann. Das Kupplungselement 2 lässt sich mit einem Gegenkupplungselement 4 eines Anhängefahrzeugs verbinden. Im vorliegenden Fall ist das Gegenkupplungselement 4 als Kugelkalotte ausgebildet. In der Darstellung gemäß Figur 1 befindet sich das Gegenkupplungselement 4 vertikal, bezogen auf die Längsachse L des Kupplungselements 2, oberhalb des Kupplungselements 2 und weist eine dem Kupplungselement 2 zugewandte sphärische Aufnahme auf, die an die Außenumfangsfläche des Kupplungselements 2 angepasst ist. Das Gegenkupplungselement 4 kann aus der in Figur 1 dargestellten Position vertikal nach unten auf das Kupplungselement 2 bewegt werden. Alternativ kann das Basiselement 3 als kippbarer Kugelbalken ausgebildet sein, der um eine horizontale Achse verschwenkt werden kann, so dass das Kupplungselement 2 vertikal verstellt werden kann und aus der in Figur 1 dargestellten Position nach oben in Richtung zum Gegenkupplungselement 4 verstellt werden kann.

Das Kupplungselement 2 kann unterschiedlich gestaltet sein, so ist es zum Beispiel auch denkbar, dass es sich bei dem Kupplungselement 2 um einen Zugzapfen einer Pitonkupplung handelt und bei dem Gegenkupplungselement 4 um ein Zugauge. Sobald Kupplungselement 2 und Gegenkupplungselement 4 miteinander gekuppelt sind, können Zugkräfte quer zur Längsachse L zwischen dem Kupplungselement 2 und dem Gegenkupplungselement 4 übertragen werden.

Zur vertikalen Sicherung des Gegenkupplungselements 4 gegenüber dem Kupplungselement 2 ist eine Niederhalteranordnung 7 vorgesehen, mittels derer verhindert werden kann, dass das Gegenkupplungselement 4 von dem Kupplungselement 2 gelöst wird. Hierzu weist die Niederhalteranordnung 7 ein Gehäuse 8 auf, welches auf dem Basiselement 4 befestigt ist. In dem Gehäuse 8 ist ein Niederhalter 9 um eine Drehachse D, die parallel zur Längsachse L angeordnet ist, drehbar angeordnet. Der Niederhalter 9 ist mit einem Drehzapfen 10 in einer Zapfenaufnahme 13 drehbar gelagert. Der Drehzapfen 10 weist eine im wesentlichen zylindrische Außenumfangsfläche auf und ist in die entsprechend gestaltete Zapfenaufnahme 13 eingesteckt. Der Niederhalter 9 weist einen aus der Zapfenaufnahme 13 herausragenden Ausleger 11 auf, der radial von der Drehachse D vorsteht. Der Niederhalter 9 lässt sich zwischen einer in der Figur 1 dargestellten Schließstellung und einer Offenstellung um die Drehachse D verdrehen. Alternativ kann vorgesehen sein, dass der Niederhalter der-art gestaltet ist, dass der Ausleger 11 um eine horizontale Drehachse D geschwenkt werden kann. Denkbar ist auch ein axiales Verstellen des Niederhalters 9.

In der Schließstellung ragt der Ausleger 11 über eine dem Kupplungselement 2 zugewandte Fangfläche 12 des Gehäuses 8 vor. Geht man davon aus, dass die Längsachse L des Kupplungselements 2 vertikal angeordnet ist, befindet sich der Ausleger 11 in der Schließstellung oberhalb des Kupplungselements 2, wobei ein Abstand zwischen dem Ausleger 11 und dem Kupplungselement 2 vorgesehen ist. Im gekuppelten Zustand befindet sich das Gegenkupplungselement 4 auf dem Kupplungselement 2 und zwischen dem Kupplungselement 2 und dem Ausleger 11, so dass der Ausleger 11 das Gegenkupplungselement 4 hindert, in Richtung der Längsachse L nach oben bewegt zu werden. Zum Freigeben des Gegenkupplungselements 4 lässt sich der Niederhalter 9 in eine seitlich verschwenkte Offenstellung bewegen, in der der Ausleger 11 geringer als in der Offenstellung über die Fangfläche 12 vorsteht, vorzugsweise überhaupt nicht vorsteht.

Weitere Einzelheiten der Anhängekupplung 1, insbesondere der Niederhalteranordnung 7, werden im folgenden auch anhand der weiteren Figuren, welche verschiedene Schnittdarstellungen der Niederhalteranordnung 7 zeigen, beschrieben.

Um die Niederhalteranordnung 7 an unterschiedliche Gegenkupplungselemente 4, insbesondere an unterschiedliche Dicken der Gegenkupplungselemente 4, anpassen zu können, ist der Niederhalter 9 höhenverstellbar ausgeführt. Der Niederhalter 9 weist hierzu eine konzentrisch zur Drehachse D angeordnete Gewindebohrung 15 am unteren Ende des Drehzapfens 10 auf, in die eine Einstellschraube 14 eingeschraubt ist. Die Einstellschraube 14 ragt nach unten vom Drehzapfen 10 vor und ist im montierten Zustand des Gehäuses 8 auf dem Basiselement 3 axial gegen das Basiselement 3 abgestützt. Je nachdem, wie tief die Einstellschraube 14 in die Gewindebohrung 15 eingeschraubt ist, steht der Niederhalter 9 mehr oder weniger weit aus der Zapfenaufnahme 13 axial in Richtung der Drehachse D vor. Somit lässt sich der Abstand des Auslegers 11 relativ zum Kupplungselement 2 einstellen, so dass unterschiedlich dicke Gegenkupplungselemente 4 auf dem Kupplungselement 2 mittels des Niederhalters 9 gesichert werden können.

Um die Einstellschraube 14 ist eine Einstellfeder 16 angeordnet, welche sich zum einen gegen die Einstellschraube 14 und zum anderen gegen den Drehzapfen 10 abstützt. Hierbei ist die Einstellfeder 16 als Druckfeder gestaltet, so dass die Einstellschraube 14 axial vorgespannt in der Gewindebohrung 15 sitzt, um ein unbeabsichtigtes Verdrehen der Einstellschraube 14 zu vermeiden.

Ferner ist eine Vorspannfeder 17 vorgesehen, welche um den Drehzapfen 10 angeordnet ist und als Schenkelfeder gestaltet ist. Die Vorspannfeder 17 sitzt mit einem ersten Schenkel 18 in einer ersten Schenkelaufnahme 19 des Drehzapfens 10 und ist axial in die erste Schenkelaufnahme 19 eingesteckt und im Drehsinne um die Drehachse D gesichert. Mit einem zweiten Schenkel 20 sitzt die Vorspannfeder 17 in einer zweiten Schenkelaufnahme 21 des Gehäuses 8. Die Vorspannfeder 17 ist derart gestaltet und angeordnet, dass sie den Niederhalter 9 von der Offenstellung in die Schließstellung mit Kraft beaufschlagt.

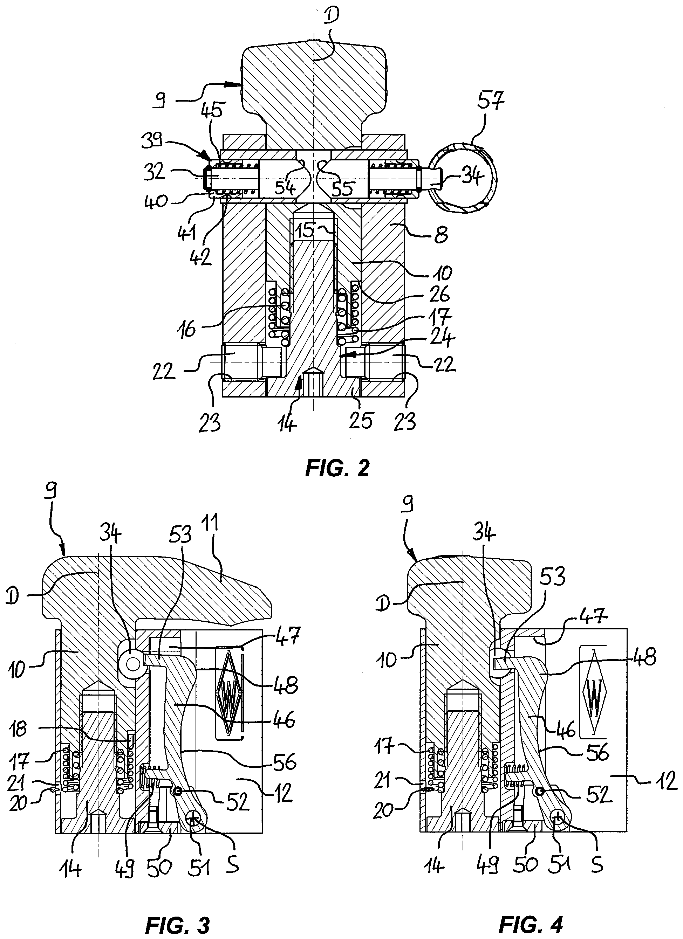

Um den Niederhalter 9 in der Zapfenaufnahme 13 axial zu sichern, sind zwei Halteschrauben 22 vorgesehen, die in jeweils eine Gewindebohrung 23 des Gehäuses 8 quer zur Drehachse D von außen bis in die Zapfenaufnahme 13 eingeschraubt sind, wie insbesondere in Figur 2 dargestellt. Die Halteschrauben 22 ragen in die Zapfenaufnahme 13 hinein und greifen in eine Ringausnehmung 24 des Niederhalters 9 ein, um diesen axial zu sichern. Die Ringausnehmung 24 ist durch eine vertikal nach unten weisende Stirnfläche 26 des Drehzapfens 10 und durch einen Schraubenkopf 25 der Einstellschraube 14 gebildet.

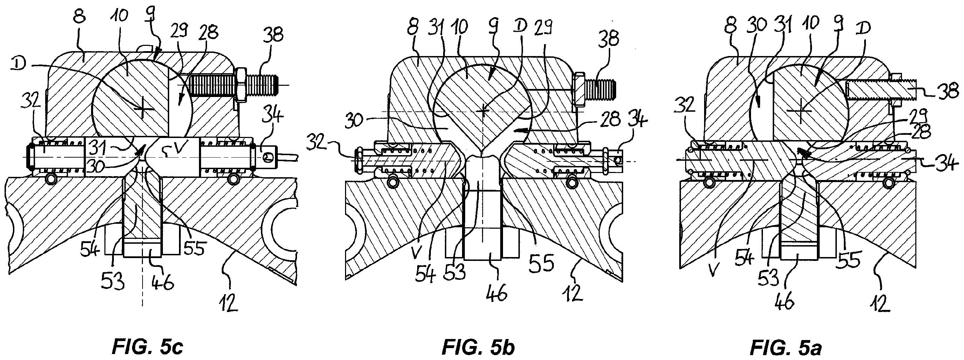

Der Niederhalter 9 lässt sich mittels einer Sicherungseinrichtung 27 sowohl in der Offenstellung als auch in der Schließstellung arretieren. Die Figuren 5a, 5b und 5c zeigen die Niederhalteranordnung 7 gemäß Figur 2 in einem Querschnitt entlang der Schnittlinie III-III. Figur 5a zeigt den Niederhalter in seiner Offenstellung, Figur 5b in einer Zwischenstellung und Figur 5c in seiner Schließstellung.

Es ist ersichtlich, dass der Drehzapfen 10, der im wesentlichen eine kreiszylindrische Außenumfangsfläche aufweist, eine erste Ausnehmung 28 aufweist, welche eine erste Arretierfläche 29 bildet und eine zweite Ausnehmung 30 aufweist, welche eine zweite Arretierfläche 31 bildet. Die Arretierflächen 29, 31 verlaufen im Querschnitt betrachtet entlang einer Sekante zur Außenumfangsfläche des Drehzapfens 10. Um den Niederhalter 9 in seiner Offenstellung zu halten (Figur 5a) ist ein erster Sicherungsbolzen 32 mit einer ersten Sicherungsfläche 33 vorgesehen. Der erste Sicherungsbolzen 32 sitzt in einer ersten Bohrung 36 des Gehäuses 8 und ist innerhalb dieser entlang einer Verstellachse V axial verstellbar. Die Verstellachse V kreuzt die Drehachse D mit Abstand. Die erste Bohrung 36 verläuft von außen durch das Gehäuse 8 in die Zapfenaufnahme 13 hinein, wobei der erste Sicherungsbolzen einerseits aus dem Gehäuse 8 herausragt und andererseits in die Zapfenaufnahme 13 hineinragt, insbesondere in der in Figur 5a dargestellten Arretierstellung. In der in Figur 5b gezeigten Freigabestellung des ersten Sicherungsbolzens 32 ragt dieser nicht soweit in die Zapfenaufnahme 13 hinein wie in der Figur 5a gezeigten Arretierstellung. In der Freigabestellung kann auch vorgesehen sein, dass der erste Sicherungsbolzen 32 komplett aus der Zapfenaufnahme 13 herausgezogen ist.

In der Offenstellung des Niederhalters 9 verläuft die Verstellachse V parallel zur ersten Arretierfläche 29 am Drehzapfen 10, wobei die erste Sicherungsfläche 33 des ersten Sicherungsbolzens 32 in Anlage zur ersten Arretierfläche 29 ist. Um den Niederhalter 9 von seiner in Figur 5a gezeigten Offenstellung in die in Figur 5c gezeigte Schließstellung zu bewegen, müsste der Niederhalter 9 und damit der Drehzapfen 10 in den in Figuren 5a bis 5c dargestellten Ansichten im Gegenuhrzeigersinn verdreht werden. Dies wird jedoch dadurch verhindert, dass die erste Arretierfläche 29 gegen die erste Sicherungsfläche 33 stößt und somit die Schulter zwischen der ersten Arretierfläche 29 und der zweiten Arretierfläche 31 mit dem ersten Sicherungsbolzen 32 kollidiert, so dass der Niederhalter 9 an einer Drehung gehindert ist.

Wird der erste Sicherungsbolzen 32 nun in die in Figur 5b dargestellte Freigabeposition überführt, ist die erste Sicherungsfläche 33 nicht mehr in Anlage zur ersten Arretierfläche 29, so dass die Schulter zwischen der ersten Arretierfläche 29 und der zweiten Arretierfläche 31 an dem ersten Sicherungsbolzen 32 vorbei bewegt werden kann, wie dies in der Figur 5b in einer Zwischenstellung des Niederhalters 9 gezeigt ist. In der Schließstellung des Niederhalters 9 befindet sich die zweite Arretierfläche 31 parallel zum ersten Sicherungsbolzen 32 und der erste Sicherungsbolzen 32 kann in seine Arretierstellung zurückbewegt werden.

In der Arretierstellung des ersten Sicherungsbolzens 32 und in der Schließstellung des Niederhalters 9, wie in Figur 5c dargestellt, befindet sich zwar die erste Sicherungsfläche 33 in Anlage zur zweiten Arretierfläche 31. Da jedoch der Drehzapfen 10 bei der Bewegung des Niederhalters 9 von der Schließstellung in die Offenstellung im Uhrzeigersinn verdreht wird, kollidiert die zweite Arretierfläche 21 nicht mit dem ersten Sicherungsbolzen 32, da sich diese in Drehrichtung vom ersten Sicherungsbolzen 32 weg bewegen würde. Daher ist ein zweiter Sicherungsbolzen 34 vorgesehen, welcher in einer zweiten Bohrung 37 des Gehäuses 8 ebenfalls entlang der Verstellachse V, jedoch im Gegensinn zum ersten Sicherungsbolzen 32, verstellbar ist. Die beiden Bohrungen 36, 37 sind beide auf der Verstellachse V zentriert. In der Arretierstellung sind beide Sicherungsbolzen einander maximal angenähert, in der Freigabestellung gemäß Figur 5b sind die beiden Sicherungsbolzen 32, 34 maximal voneinander entfernt.

In der Schließstellung des Niederhalters 9 gemäß Figur 5c befindet sich der zweite Sicherungsbolzen 34 in Anlage zur zweiten Arretierfläche 31, und zwar im Übergang von der zweiten Arretierfläche 31 zur ersten Arretierfläche 29. Somit kollidiert die Schulter zwischen der ersten Arretierfläche 29 und der zweiten Arretierfläche 31, wenn versucht wird, den Niederhalter 9 im Uhrzeigersinn zu verdrehen. Erst, wenn der zweite Sicherungsbolzen 34 in seine Freigabeposition gemäß Figur 5b überführt ist, kann die Schulter zwischen der ersten Arretierfläche 29 und der zweiten Arretierfläche 31 den zweiten Sicherungsbolzen 34 passieren.

In dem Gehäuse ist ferner ein Näherungssensor 38 vorgesehen, der in der Offenstellung des Niederhalters 9 der kreiszylindrischen Außenumfangsfläche des Drehzapfens 10 gegenüber steht und in der Schließstellung der ersten Arretierfläche 29 gegenüber steht, welche weiter entfernt vom Näherungssensor 38 ist, als die kreiszylindrische Außenumfangsfläche des Drehzapfens 10. Hierdurch lässt sich die Position des Niederhalters 9 detektieren und an ein Steuersystem bzw. Kontrollsystem weitergeben, um dem Fahrer ein Signal über die Position des Niederhalters 9 geben zu können.

Grundsätzlich ließe sich die Sicherung des Niederhalters 9 auch mit einem einzigen Sicherungsbolzen realisieren, der in diesem Fall tief genug in die Zapfenaufnahme 13 eintauchen müsste, um in beiden Drehpositionen des Niederhalters 9 gegen beide Arretierflächen 29, 31 in Anlage zu gelangen, und zwar im Bereich der Schulter im Übergang zwischen der ersten Arretierfläche 29 und der zweiten Arretierfläche 31.

Die beiden Sicherungsbolzen 32, 34 sind in Richtung zur Einnahme ihrer Arretierstellung federbeaufschlagt. Hierzu ist je Sicherungsbolzen 32, 34 eine Hülse 39 vorgesehen, welche in die jeweilige Bohrung 36, 37 von außen eingesteckt ist. Die Hülsen 39 weisen jeweils einen Boden 34 und eine Wand 21 auf, wobei an der Wand eine Umfangsnut 42 vorgesehen ist. Die Sicherungsbolzen 32, 34 sind jeweils durch den Boden 40 hindurchgeführt, wobei eine Druckfeder 45 sich einerseits gegen den Boden 40 und andererseits gegen den Sicherungsbolzen 32, 34 abstützt und diesen in die Arretierstellung beaufschlagt. Zur Sicherung der Hülse 39 in der jeweiligen Bohrung 36, 37 ist ein Sicherungsstift 43 je Hülse 39 vorgesehen, der tangential zur Außenumfangsfläche der Hülse 39 durch eine Bohrung 44 im Gehäuse 8 hindurchgesteckt ist und in die Umfangsnut 42 der Hülse 39 eingreift.

Zum Betätigen ist ein Betätigungshebel 46 vorgesehen, welcher in einer Ausnehmung 47 des Gehäuses 8 um eine Schwenkachse S schwenkbar angeordnet ist, wie insbesondere in den Figuren 3 und 4 dargestellt. Der Betätigungshebel 46 ist zwischen einer in Figur 4 dargestellten Ausgangsstellung und einer in Figur 5 dargestellten Betätigungsstellung schwenkbar. Die Ausnehmung 47 mündet in die Fangfläche 12 des Gehäuses 8, so dass ein Betätigungsabschnitt 48 des Betätigungshebels 46 in der Ausgangsstellung aus der Ausnehmung 47 vorstehen kann, so dass der Betätigungshebel 46, zumindest mit seinem Betätigungsabschnitt 48, von der Fangfläche 12 vorsteht. Die Ausnehmung 47 ist derart angeordnet, dass der Betätigungshebel 46 zwischen der Fangfläche 12 und dem Kupplungselement 2 angeordnet ist. Ferner befindet sich der Betätigungshebel 46 unterhalb des Auslegers 11 des Niederhalters 9, wenn sich der Niederhalter 9 in seiner Schließstellung befindet.

Der Betätigungshebel 46 ist durch eine Druckfeder 49, welche sich einerseits gegen den Betätigungshebel 46 und andererseits gegen das Gehäuse 8 abstützt, in Richtung zur Ausgangsstellung mit Kraft beaufschlagt und kann gegen die Federkraft der Druckfeder 49 in Richtung zur Betätigungsstellung geschwenkt werden.

Der Betätigungshebel 46 ist an einem Lagerelement 50 über einen Spannstift 51 schwenkbar befestigt, wobei das Lagerelement 50 wiederum an dem Gehäuse 8 befestigt wird. Hierbei ist der Spannstift 51 und somit die Schwenkachse S horizontal angeordnet, wobei die Schwenkachse S die Drehachse D und die Längsachse L mit Abstand kreuzt. Ferner ist an dem Betätigungshebel 46 ein Anschlagstift 52 befestigt, welcher in der Ausgangsstellung des Betätigungshebels 46 gegen das Lagerelement 50 abgestützt ist und somit verhindert, dass der Betätigungshebel 46 weiter aus der Ausnehmung 47 gedrückt wird.

In der Ausgangsstellung befindet sich der Betätigungshebel 46 und damit der Betätigungsabschnitt 48 weiter aus der Ausnehmung 47 heraus verlagert als in der Betätigungsstellung. Der Betätigungsabschnitt 48 befindet sich hierbei in einem Fangbereich für das Gegenkupplungselement 4, so dass beim Ankuppeln des Gegenkupplungselements 4 mit dem Kupplungselement 2 das Gegenkupplungselement 4 gegen den Betätigungsabschnitt 48 in der Ausgangsstellung des Betätigungshebels 46 anläuft, so dass der Betätigungshebel 46 von der Ausgangsstellung in die Betätigungsstellung überführt wird.

Der Betätigungshebel 46 weist einen in Richtung zur Drehachse D vorstehenden Betätigungsabschnitt 53 auf, welcher sich bei der Überführung von der Ausgangsstellung in die Betätigungsstellung zwischen die beiden Sicherungsbolzen 32, 34 schiebt und diese ausgehend von der Sicherungsstellung in die Freigabestellung überführt. Hierzu läuft der Betätigungsabschnitt 53 gegen eine erste Betätigungsfläche 54 am Ende des ersten Sicherungsbolzens 32 und gegen eine zweite Betätigungsfläche 55 am Ende des zweiten Sicherungsbolzens 34 an, wobei die beiden Betätigungsflächen 54, 55 einander zugewandt sind und in etwa kegelstumpfförmig ausgebildet sind, so dass durch eine radiale Bewegung des Betätigungsabschnitts 48 zur Drehachse D die beiden Sicherungsbolzen 32, 34 entlang der Verstellachse V gegensinnig auseinander gedrückt werden können.

Bei einem Ankuppelvorgang befindet sich das Gegenkupplungselement 4 zunächst vertikal oberhalb des Kupplungselements 2. Wenn es sich bei dem Basiselement 3 um einen Schwenkbalken handelt, wird das Kupplungselement 2 vertikal in etwa entlang der Längsachse L nach oben in eine Kuppelstellung mit dem Gegenkupplungselement 4 bewegt. Hierbei stößt das Gegenkupplungselement 4 gegen den Betätigungsabschnitt 48 des Betätigungshebels 46 und drückt den Betätigungshebel 46 ausgehend von der aus der Ausnehmung 37 vorstehenden Ausgangsposition in die Betätigungsposition, in der der Betätigungshebel 46 tiefer in die Ausnehmung 47 gedrückt ist. Hierdurch wird der Betätigungsabschnitt 48 des Betätigungshebels 46 zwischen die beiden Sicherungsbolzen 32, 34 gedrückt. Befindet sich bei dieser Bewegung der Niederhalter 9 zunächst in der in Figur 5a dargestellten Offenstellung und die Sicherungsbolzen 32, 34 in ihrer Arretierstellung, wird durch das Auseinanderdrücken der Sicherungsbolzen 32, 34 die erste Arretierfläche 29 des Niederhalters 9 freigegeben, so dass der Niederhalter 9 ausgehend von seiner Offenstellung über die Vorspannfeder 17 automatisch in Richtung zu der Schließstellung freigegeben bzw. bewegt wird. Sobald das Gegenkupplungselement 4 vollständig mit dem Kupplungselement 2 verbunden ist und somit den Weg für den Ausleger 11 freigibt, kann der Niederhalter 9 vollständig in die Schließstellung überführt werden. In der vollständig gekuppelten Position des Gegenkupplungselements 4 mit dem Kupplungselement 2 hat das Gegenkupplungselement 4 den Betätigungsabschnitt 48 des Betätigungshebels 46 vollständig passiert und befindet sich im Bereich einer gewölbten Ausnehmung 47 des Betätigungshebels 46, so dass der Betätigungshebel 46 durch die Federkraft der Druckfeder 49 zurück in die Ausgangsstellung überführt wird. Hierdurch werden die beiden Sicherungsbolzen 32, 34 freigegeben und nehmen durch die Federkraft der Druckfedern 45 innerhalb der Hülsen 39 wieder ihre Arretierstellung ein, so dass der Niederhalter 9 gegen ein Verdrehen gesichert ist.

Zum Entsichern ist der zweite Sicherungsbolzen 34, welcher den Niederhalter 9 in seiner Schließstellung sichert, mit einem Zugring 57 versehen, über den der zweite Sicherungsbolzen 34 manuell in seine Freigabestellung überführt werden kann, so dass der Niederhalter 9 wiederum manuell in seine Offenstellung überführbar ist. Bei dieser Bewegung befindet sich der erste Sicherungsbolzen 32 zunächst noch in seiner Arretierstellung. Dieser wird jedoch beim Verdrehen des Niederhalters 9 im Uhrzeigersinn von der Schulter zwischen der ersten Arretierfläche 29 und der zweiten Arretierfläche 31 kurzzeitig in seine Freigabeposition überführt. Sobald die Schulter den ersten Sicherungsbolzen 32 passiert hat, wird dieser automatisch durch die Druckfeder 45 in der Hülse 39 in seine Sicherungsposition überführt, so dass der Niederhalter 9 in seiner Offenstellung arretiert ist.

Alternativ kann der zweite Sicherungsbolzen 35 auch durch eine Verstelleinrichtung, wie zum Beispiel einen Bowdenzug, oder eine andere Antriebsvorrichtung verstellbar sein, um den zweiten Sicherungsbolzen in seine Freigabeposition zu überführen. Ferner kann auch der Niederhalter 9 von einer Verstelleinrichtung, wie zum Beispiel einen Bowdenzug oder einer Antriebseinheit, von der Schließstellung in die Offenstellung überführbar sein.

### Bezugszeichenliste

- 1: Anhängekupplung
- 2: Kupplungselement
- 3: Basiselement
- 4: Gegenkupplungselement
- 5: Befestigungszapfen
- 6: Befestigungsbohrung
- 7: Niederhalteranordnung
- 8: Gehäuse
- 9: Niederhalter
- 10: Drehzapfen
- 11: Ausleger
- 12: Fangfläche
- 13: Zapfenaufnahme
- 14: Einstellschraube
- 15: Gewindebohrung
- 16: Einstellfeder
- 17: Vorspannfeder
- 18: erster Schenkel
- 19: erste Schenkelaufnahme
- 20: zweiter Schenkel
- 21: zweite Schenkelaufnahme
- 22: Halteschraube
- 23: Gewindebohrung
- 24: Ringausnehmung
- 25: Schraubenkopf
- 26: Stirnfläche
- 27: Sicherungseinrichtung
- 28: erste Ausnehmung
- 29: erste Arretierfläche
- 30: zweite Ausnehmung
- 31: zweite Arretierfläche
- 32: erster Sicherungsbolzen
- 33: erste Sicherungsfläche
- 34: zweiter Sicherungsbolzen
- 35: zweite Sicherungsfläche
- 36: erste Bohrung
- 37: zweite Bohrung
- 38: Näherungssensor
- 39: Hülse
- 40: Boden
- 41: Wand
- 42: Umfangsnut
- 43: Sicherungsstift
- 44: Bohrung
- 45: Druckfeder
- 46: Betätigungshebel
- 47: Ausnehmung
- 48: Betätigungsabschnitt
- 49: Druckfeder
- 50: Lagerelement
- 51: Spannstift
- 52: Anschlagstift
- 53: Betätigungsabschnitt
- 54: erste Betätigungsfläche
- 55: zweite Betätigungsfläche
- 56: Ausnehmung
- 57: Zugring

- D: Drehachse
- L: Längsachse
- S: Schwenkachse
- V: Verstellachse

## Patentansprüche

1. Niederhalteranordnung (7) für eine Anhängekupplung (1) für Zugfahrzeuge, wobei die Niederhalteranordnung (7) folgendes aufweist:
ein Gehäuse (8) mit einer Fangfläche (12), welche in einem an einer Anhängekupplung (1) montiertem Zustand einem Kupplungselement (2) der Anhängekupplung (1) zugewandt ist,
einen Niederhalter (9), der zwischen einer Offenstellung und einer Schließstellung am Gehäuse (8) bewegbar gehalten ist und in der Schließstellung über die Fangfläche (12) derart übersteht, dass ein Gegenkupplungselement (4) am Kupplungselement (2) sicherbar ist, und
eine Betätigungseinrichtung, mittels derer der Niederhalter (9) von seiner Offenstellung in seine Schließstellung verstellbar ist, wobei die Betätigungseinrichtung ein Betätigungselement (46) umfasst, welches zwischen einer Ausgangsstellung und einer Betätigungsstellung verstellbar am Gehäuse (8) gehalten ist,
**dadurch gekennzeichnet,**
**dass** das Betätigungselement (46) in seiner Ausgangsstellung von einem Gegenkupplungselement (4) verstellbar von der Fangfläche (12) vorsteht.

2. Niederhalteranordnung (7) nach Anspruch 1,
**dadurch gekennzeichnet,**
**dass** der Niederhalter (9) in seiner Schließstellung weiter über die Fangfläche (12) übersteht als in seiner Offenstellung.

3. Niederhalteranordnung (7) nach einem der vorangehenden Ansprüche,
**dadurch gekennzeichnet,**
**dass** die Betätigungseinrichtung eine Sicherungseinrichtung (27) aufweist, die zwischen einer Arretierstellung und einer Freigabestellung verstellbar ist, wobei die Sicherungseinrichtung (27) in der Arretierstellung den Niederhalter (9) zumindest in der Offenstellung arretiert.

4. Niederhalteranordnung (7) nach Anspruch 3,
**dadurch gekennzeichnet,**
**dass** durch Überführen des Betätigungselements (46) von der Ausgangsstellung in die Betätigungsstellung die Sicherungseinrichtung (27) von der Arretierstellung in die Freigabestellung verstellbar ist.

5. Niederhalteranordnung (7) nach einem der Ansprüche 3 oder 4,
**dadurch gekennzeichnet,**
**dass** die Sicherungseinrichtung (27) zumindest einen Sicherungsbolzen (32, 34) aufweist, der zwischen einer Arretierstellung und einer Freigabestellung verstellbar ist, wobei der Sicherungsbolzen (32, 34) in seiner Arretierstellung den Niederhalter (9) zumindest in der Offenstellung arretiert.

6. Niederhalteranordnung (7) nach Anspruch 5,
**dadurch gekennzeichnet,**
**dass** der Sicherungsbolzen (32) in der Arretierstellung in Anlage zu einer ersten Arretierfläche (29) des Niederhalters (9) gehalten ist und den Niederhalter (9) in der Offenstellung gegen Verstellen in die Schließstellung arretiert.

7. Niederhalteranordnung (7) nach einem der Ansprüche 5 bis 6,
**dadurch gekennzeichnet,**
**dass** der Sicherungsbolzen (34) in der Arretierstellung in Anlage zu einer zweiten Arretierfläche (31) des Niederhalters (9) gehalten ist und den Niederhalter (9) in der Schließstellung gegen Verstellen in die Offenstellung arretiert.

8. Niederhalteranordnung (7) nach einem der Ansprüche 5 bis 7,
**dadurch gekennzeichnet,**
**dass** der Sicherungsbolzen (32, 34) entlang einer Verstellachse (V) verstellbar ist, die die Drehachse (D) des Niederhalters (9) mit Abstand kreuzt, und dass der Drehzapfen (10) des Niederhalters (9) eine Außenumfangsfläche mit einer ersten Ausnehmung (28) aufweist, wobei die erste Ausnehmung (28) die erste Arretierfläche (29) bildet.

9. Niederhalteranordnung (7) nach einem der Ansprüche 5 bis 8,
**dadurch gekennzeichnet,**
**dass** der Sicherungsbolzen (32, 34) entlang einer Verstellachse (V) verstellbar ist, die die Drehachse (D) des Niederhalters (9) mit Abstand kreuzt, und dass der Drehzapfen (10) des Niederhalters (9) eine Außenumfangsfläche mit einer zweiten Ausnehmung (30) aufweist, wobei die zweite Ausnehmung die zweite Arretierfläche (31) bildet.

10. Niederhalteranordnung (7) nach einem der Ansprüche 5 bis 9,
**dadurch gekennzeichnet,**
**dass** zwei Sicherungsbolzen (32, 34) vorgesehen sind, die gegensinnig entlang einer Verstellachse (V) verstellbar sind.

11. Niederhalteranordnung (7) nach einem der vorangehenden Ansprüche,
**dadurch gekennzeichnet,**
**dass** der Niederhalter (9) einen Drehzapfen (10) aufweist, mit dem der Niederhalter (9) um eine Drehachse (D) drehbar im Gehäuse (8) aufgenommen ist, und
**dass** der Niederhalter (9) einen Ausleger (11) aufweist, der radial vom Drehzapfen (10) derart vorsteht, dass der Niederhalter (9) in der Schließstellung von der Fangfläche (12) vorsteht.

12. Niederhalteranordnung (7) nach einem der vorangehenden Ansprüche,
**dadurch gekennzeichnet,**
**dass** das Betätigungselement (46) in einer in die Fangfläche (12) mündende Ausnehmung (47) des Gehäuses (8) verstellbar, vorzugsweise schwenkbar, aufgenommen ist, und
**dass** das Betätigungselement (46) in der Ausgangsstellung zumindest mit einem Betätigungsabschnitt (48) aus der Ausnehmung (47) von der Fangfläche (12) vorsteht.

13. Niederhalteranordnung (7) nach einem der vorangehenden Ansprüche,
**dadurch gekennzeichnet,**
**dass** der Niederhalter (9) mittels einer ersten Verstelleinrichtung von der Schließstellung in die Offenstellung überführbar ist.

14. Niederhalteranordnung (7) nach einem der vorangehenden Ansprüche,
**dadurch gekennzeichnet,**
**dass** die Sicherungseinrichtung (27) mittels einer zweiten Verstelleinrichtung (57) von der Arretierstellung in die Freigabestellung überführbar ist.

15. Anhängekupplung (1) für Zugfahrzeuge, wobei die Anhängekupplung (1) folgendes aufweist:
eine Niederhalteranordnung (7) gemäß einem der vorangehenden Ansprüche und
ein Kupplungselement (2) zur Aufnahme eines Gegenkupplungselements (4).
